Europäisches Patentamt

European Patent Office

Office européen des brevets

(11) Publication number: **0 038 599**
**B2**

# (12) NEW EUROPEAN PATENT SPECIFICATION

(45) Date of publication of the new patent specification: **29.08.90**

(21) Application number: **81200424.0**

(22) Date of filing: **14.04.81**

(51) Int. Cl.[5]: **C 04 B 28/22,** C 04 B 14/02, C 04 B 20/10, C 04 B 38/02, C 04 B 38/10, C 04 B 2/06, C 04 B 2/08

(54) Granulated material comprising a filler and an inorganic binding agent.

(30) Priority: **17.04.80 NL 8002251**
**17.04.80 NL 8002252**

(43) Date of publication of application:
**28.10.81 Bulletin 81/43**

(45) Publication of the grant of the patent:
**03.09.86 Bulletin 86/36**

(45) Mention of the opposition decision:
**29.08.90 Bulletin 90/35**

(84) Designated Contracting States:
**BE CH DE FR GB IT LI LU NL SE**

(56) References cited:
AU-D-6 029 873
CH-A- 259 066
DE-A-2 116 533
DE-B-1 245 829
DE-C- 260 930
FR-A-1 280 980
FR-A-2 254 366
GB-A-1 537 501
NL-A-7 605 527
NL-A-7 807 142
US-A-3 352 699

(73) Proprietor: **Aardelite-Holding B.V.**
**Industrieweg 70**
**NL-8071 CW Nunspeet (NL)**

(72) Inventor: **Loggers, Hendriks**
**Prinses Beatrixlaan 37**
**NL-3958 J Amerongen (NL)**
Inventor: **Versteeg, Gitsbert**
**Stationslaan 55**
**NL-8071 CK Nunspeet (NL)**

(74) Representative: **van der Veken, Johannes**
**Adriaan et al**
**EXTERPATENT B.V. P.O. Box 90649**
**NL-2509 LP 's-Gravenhage (NL)**

(56) References cited:
EDITIONS EYROLLES, 1971, pages 106, 107
Paris, FR. A. JARRIGE: "Les cendres volantes"
The Chemistry of Cement and Concrete 3rd Ed.
F. M. Lea, Chemical Publishing Co. Inc. 1971,
pages 395, 396, 414, 434, 446
Zement-Kalk-Gips, Sonderausgabe Nr. 2,
December 1952, pp. 42-45

The file contains technical information submitted after the application was filed and not included in this specification

Courier Press, Leamington Spa, England.

EP 0 038 599 B2

**Description**

The invention relates to a process of forming granules by at least mixing a calcium-containing product, water and a filler presenting pozzolanic properties, forming granules from said mixture and subjecting same to heating.

Such a process is known from the book The Chemistry of Cement and Concrete by F. M. Lea, 3rd Edition, Chemical Publishing Company, Inc., page 434. According to said process articles consisting of hydrated lime, sand and a pozzolana are cured by heating.

It has been found that curing of such mixtures containing fly ash from a power station as a filler presenting pozzolanic properties is very slow even at high temperatures.

It is now the aim of the invention to provide a process providing a rapid curing of granules containing a fly ash from a power station at rather low temperatures.

This aim is attained in that calcium oxide, water and fly ash from a power station are mixed together and granules are formed from said mixture, said granules being subjected to a heat treatment comprised between 50 and 100°C.

It should be noted that it is known from AU—A—60298/73 to mix Portland cement with fly ash and water and to cure an article moulded from said mixture by heating in an autoclave for a long time at a pressure of about 12 kg/cm³ which is much higher than 100°C. A foaming agent such as aluminium powder may be added to the mixture to be cured in order to form a foamed article.

Preferably the heat treatment is effected at about 95°C as this provides excellent results.

Advantageously granules formed from said mixture are stored at room temperature and subsequently heated by means of heat derived from a chemical or physical reaction as in this way latent heat which is otherwise lost can now be used for curing granules thus decreasing the production costs.

According to a very advantageous embodiment the heat for the heat treatment is obtained by mixing silica containing substances and calcium oxide, the quantity of calcium oxide in the mixture to be prepared amounting to more than 5%, preferably more than 10% of the calcium oxide and preferably at least 35% of calcium oxide is present in the mixture.

In this way the heat evolved in slaking calcium oxide is suitably used for curing the granules obtained according to the process of the invention.

The granules will then act as heat absorbing particles without any danger of an explosive steam formation in slaking lime.

In this respect it should be noted that slaking calcium oxide causes much heat to be released so that this reaction has to be carefully controlled, which makes this process very expensive.

E.g. in order to produce hydrothermally cured products, it is commonly known to mix a silica oxide containing product in the form of sand particles with calcium oxide and water. Because of the reaction of calcium oxid with water, heat will escape, which is absorbed in the mixture by the sand and the used water. Said process is unsatisfactory as a calcium ratio exceeding 10% of the mixture causes the temperature of said mixture to become too high, so that an explosive steam is produced so that the mixture of calcium and sand particles, will be ejected from the reaction zone, which in most cases is an autoclave.

The latter phenomenon is very disadvantageous as e.g. 23% of calcium oxide needs to be used in order to produce hydrothermally cured products, containing powdered quartz. From the foregoing it follows that the said products cannot be made in a known manner, by mixing powdered quartz with the finally desired quantity of calcium, unless rather expensive provisions are made. On the other hand, the known process is unsatisfactory in that mixtures containing greater quantities of calcium oxide cannot possibly be prepared. Therefore the heat developed due to the mixing cannot be recovered at a high level and the respective mixture cannot be admixed with e.g. an additional quantity of silica containing products. If the latter possibility could be realized, rather small autoclaves could be used for mixing and finally a further dilution of the mixture by means of silica containing products or fillers in mixers known per se, could be effected.

An additional disadvantage of the latter process is, that very great quantities of material have to be conveyed through the autoclave, which involves a notable consumption of energy.

Now by adding the granules obtained according to the process of the invention to such mixtures it is possible to prepare mixtures of powdered quartz and calcium oxide, wherein the calcium oxide amounts to 23%. By hydrothermally curing said mixtures, shaped products having particular properties can be obtained.

By subsequently removing the granules from such a final product, a mixture is finally obtained which possesses a very high calcium content.

The removed granules are advantageously conveyed through a heat discharge zone, for instance a liquid fluid bath, in which the heat absorbing particles transmit their heat to the liquid fluid, which fluid may be subsequently used for heating operations.

As the granules may obtain a high temperature, said heat may also be recovered at a high heat level and may therefore also be used for, for instance, city heating circuits.

The volume weight of the particles may advantageously be controlled by incorporating a foaming agent and/or a blowing means, such as casein or aluminium powder, in the granules. A product is then obtained having open or closed cells and a volume weight comprised between 0,3 to 1,8 kg/l.

The invention will be illustrated by the accompanying drawings wherein:

Fig. 1 shows an apparatus for executing the process according to the invention;

Fig. 2 shows a preferred reactor for performing the process according to the invention.

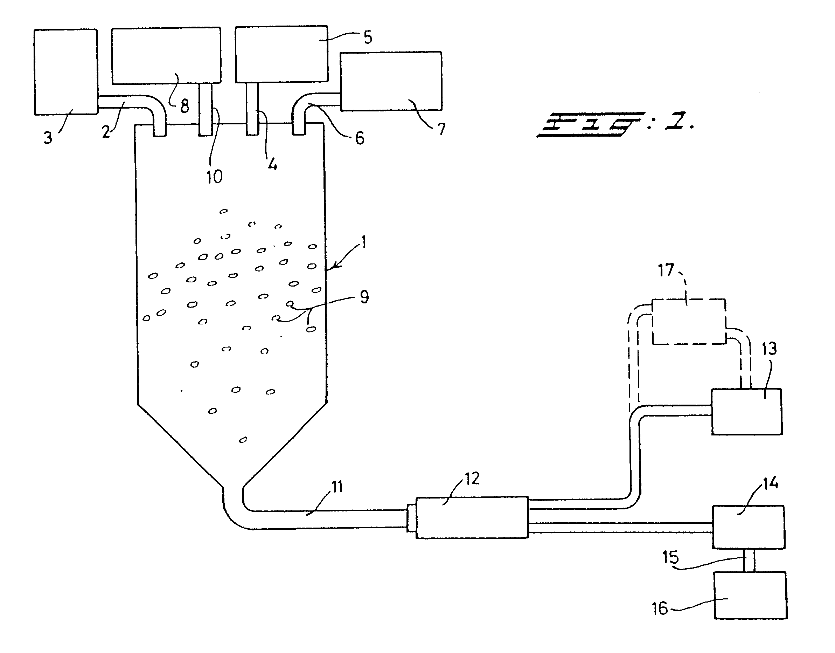

Fig. 1 shows an apparatus comprising a mixing vessel 1, provided with an inlet 2 for a silica containing product. Sand is supplied from a storage container 3, whereas liquid is supplied through an inlet 4 from a storage container 5. The liquid generally consists of water.

Finally, inlet 6 is provided for adding calcium oxide from a storage container 7.

The apparatus further comprises a storage container 8 for the receipt for heat absorbing particles 9, which may be added to the mixing vessel, through inlet 10.

The lower side of the mixing vessel tapers and comprises a mixing vessel outlet 11, so as to discharge the mixture with the removable particles from said mixing vessel.

The mixture is subsequently converted to a sieving installation 12, where the removable particles are removed and discharged towards a particle storage container 13, whilst the mixture proper is discharged towards a storage container 14, wherefrom it may be used for shaping for instance calcium sandstone in unit 16, after sand has been added through an additional sand supply 15 and been mixed with the mixure.

If a cylindrical reactor is used for curing articles containing calcium oxide and a silica product sometimes the moist granules as formed are not sufficiently form-stabilized and thus these granules are flattened by pressure.

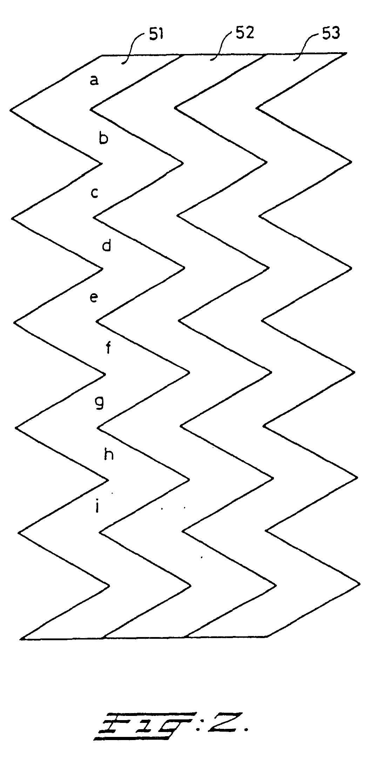

Fig. 2 shows a reactor comprising a plurality of zones 51, 52 and 53 for curing the granules. In order to decrease the pressure on the different particles being in the lower part of the reactor, due to the weight of granules being in the upper part, it is suggested to use a reactor having compartments a, b, c, d, e, f, g, h and i which are staggered with respect to each other. Thus, the granules formed by the granulator are protected against high compressing forces.

The granules in the compartments a—i can be subjected to heating by e.g. heat obtained by reacting CaO with water but also waste heat from electrial plants may be passed through the zones.

Preferably zone 51 is used for heating bigger granules, zone 52 for smaller granules and at last zone 53 may be used for heating the smallest particles.

This also contributes to obtaining an excellent product as now in each zone granules of a similar size can be heated. Granules of a similar size can be separated from a mixture by sieving.

## Claims

1. Process of forming granules by at least mixing a calcium-containing product, water and a filler presenting pozzolanic properties, forming granules from said mixture and subjecting same to heating, characterized in that, calcium oxide, water and fly ash from a power station are mixed together and granules are formed from said mixture, said granules being subjected to a heat treatment comprised between 50 and 100°C.

2. Process according to claim 1, characterized in said heat treatment is effected at about 95°C.

3. Process according to any one of claims 1 or 2, characterized in that, granules formed from said mixture are stored at room temperature and subsequently heated by means of heat derived from a chemical or physical reaction.

4. Process according to any one of claims 1 to 3, characterized in that the heat for the heat treatment is obtained by mixing silica containing substances and calcium oxide, the quantity of calcium oxide in the mixture to be prepared amounting to more than 5%.

5. Process according to claim 4, characterized in that more than 10% of calcium oxide and preferably at least 35% of calcium oxide is present in the mixture.

6. Process according to claim 4, characterized in that at least 20 to 30% of calcium oxide is present in the mixture.

7. Process according to any one of the preceding claims 1—6, characterized in that, the material to be subjected to said heat treatment is passed through subsequent interconnected zones being located vertically in a staggered manner with respect to each other so that the granules fall by gravity from one zone to the other.

8. Process according to claims 1 to 7, characterized in that the granules contain a blowing agent and/or a foaming agent.

## Patentansprüche

1. Verfahren zum Bilden von Granulat, wobei mindestens ein Kalzium enthaltendes Produkt, Wasser und ein Füllstoff mit puzzolanartigen Eigenschaften vermischt werden, Granulat aus dieser Mischung gebildet und dieses erhitzt wird, dadurch gekennzeichnet, daß Kalziumoxid, Wasser und Flugasche von einem Kraftwerk miteinander vermischt werden und aus dieser Mischung Granulat gebildet wird, wobei das Granulat einer Wärmebehandlung mit Temperaturen zwischen 50 und 100°C unterzogen wird.

2. Verfahren nach Patentanspruch 1, dadurch gekennzeichnet, daß die Wärmebehandlung bei etwa 95°C stattfindet.

3. Verfahren nach einem der Patentansprüche 1 oder 2, dadurch gekennzeichnet, daß aus der Mischung gebildetes Granulat bei Zimmertemperatur gelagert wird und anschließend mittels aus einer chemischen oder physikalischen Reaktion gewonnenen Wärme erhitzt wird.

4. Verfahren nach einem der Patentansprüche 1 bis 2, dadurch gekennzeichnet, daß die Wärme für die Wärmebehandlung gewonnen wird, indem kieselerdehaltige Stoffe und Kalziumoxid vermischt werden, wobei der Kalziumoxidanteil in der zu erstellenden Mischung mehr als 5 Prozent beträgt.

5. Verfahren nach Patentanspruch 4, dadurch gekennzeichnet, daß mehr als 10 Prozent Kalziumoxid und vorzugsweise mindestens 36 Prozent Kalziumoxid in der Mischung enthalten sind.

6. Verfahren nach Patentanspruch 4, dadurch gekennzeichnet, daß mindestens 20 bis 30 Prozent Kalziumoxid in der Mischung enthalten sind.

7. Verfahren nach einem der Patentansprüche 1 bis 6, dadurch gekennzeichnet, daß das der Wärmebehandlung zu unterwerfende Material durch aufeinanderfolgende, untereinander verbundene Zonen geleitet wird, welche senkrecht und zueinander versetzt angeordnet sind, so daß das Granulat durch die Schwerkraft von einer Zone in die nächste fällt.

8. Verfahren nach den Patentansprüchen 1 bis 7, dadurch gekennzeichnet, daß das Granulat ein Treibmittel und/oder ein Schäummittel enthält.

**Revendications**

1. Processus industriel de formation de granules comprenant au moins le mélange d'un produit contenant du calcium, de l'eau et un matériau du remplissage présentant des propriétés pouzzolaniques, la formation des granules à partir dudit mélange et le traitement de ce mélange par la chaleur, caractérisé en ce que l'oxyde de calcium, l'eau et les cendres volantes provenant d'une centrale sont mélangés ensemble et que des granules sont formés à partir dudit mélange, lesdits granules étant soumis à un traitement par la chaleur comprise entre 50 et 100°C.

2. Processus selon la revendication 1, caractérisé en ce que ledit traitement par la chaleur est effectué aux alentours de 95°C.

3. Processus selon l'une quelconque des revendications 1 ou 2 caractérisé en ce que les granules formés à partir dudit mélange sont conservés à température ambiante et ensuite chauffés par des moyens de chauffage provenant de réactions physiques ou chimiques.

4. Processus selon l'une quelconque des revendications 1 ou 3, caractérisé en ce que la chaleur pour le traitement par la chaleur est obtenue par le mélange de substances contenant du silicium et d'oxyde de calcium, la proportion d'oxyde de calcium dans le mélange à préparer s'élevant à plus de 5%.

5. Processus selon la revendication 4, caractérisé en ce que plus de 10% d'oxyde de calcium sont présents dans le mélange.

6. Processus selon la revendication 4, caractérisé en ce que au moins 20 à 30% d'oxyde de calcium sont présents dans le mélange.

7. Processus selon l'une quelconque des revendications 1 à 6, caractérisé en ce que le matériau devant être soumis audit traitement par la chaleur est passé à travers des zones d'interconnection étant situées verticalement de façon étagée les unes par rapport aux autres de façon à ce que les granules tombent par gravité depuis une zone vers l'autre.

8. Processus selon les revendications 1 à 7, caractérisé en ce que les granules contiennent un agent gonflant et/ou un agent moussant.

FIG.1.

51   52   53

a

b

c

d

e

f

g

h

i

$$Fig. 2.$$